# EUROPÄISCHE PATENTSCHRIFT

(11) **EP 2 495 091 B1**
(45) Veröffentlichungstag und Bekanntmachung des Hinweises auf die Patenterteilung: **29.01.2014**
(21) Anmeldenummer: 12158132.6
(22) Anmeldetag: 05.03.2012
(51) Int. Cl.: B29C 49/46, B29C 49/42

(54) **Blasformmaschine mit Sterilraum und steriler Blasluftzuführung**
Blow moulding device with sterile area and sterile blown air supply
Machine de moulage par soufflage dotée d'une chambre stérile et d'une entrée d'air de soufflage stérile

(30) Priorität: 04.03.2011 DE 102011013120
(43) Veröffentlichungstag der Anmeldung: 05.09.2012
(73) Patentinhaber: Krones AG, 93073 Neutraubling (DE)
(72) Erfinder: Geltinger, Florian, 93093 Donaustauf (DE); Knott, Josef, 84069 Walkenstetten/Schierling (DE); Handschuh, Eduard, 93047 Regensburg (DE)
(74) Vertreter: Bittner, Bernhard

(56) Entgegenhaltungen:
- EP-A1- 2 388 129
- EP-A2- 2 388 127
- WO-A2-2010/020529

## Beschreibung

Die Erfindung bezieht sich auf eine Vorrichtung zum Umformen von Kunststoffvorformlingen zu Kunststoffbehältnissen. Derartige Vorrichtungen sind aus dem Stand der Technik seit langem bekannt. Dabei weisen diese Vorrichtungen üblicherweise eine Vielzahl von Blasstationen auf, die jeweils mittels Blasformen die Kunststoffvorformlinge durch Beaufschlagen von Luft zu Kunststoffbehältnissen expandieren.

Weiterhin sind aus dem Stand der Technik auch aseptische Blasmaschinen bekannt, welche einen Sterilraum aufweisen, um in diesem Sterilraum den Blasvorgang unter sterilen Bedingungen durchzuführen. Eine derartige Blasmaschine ist aus der WO 2010/020529 A2 bekannt. Problematisch ist bei derartigen aseptischen Blasmaschinen das Vorhandensein von Spalten und Lagerstellen in der sterilen Zone. In diesen könnten sich Keime binden, die durch die enge Geometrie im Spalt bei der Sterilisation der Maschine (zum Beispiel durch gasförmiges H₂O₂) vor Abtötung geschützt werden.

Es wäre deshalb möglich, dass diese Keime zu einer Kontamination der Maschine und der Behälter führen. Üblicherweise weist, wie oben erwähnt, eine derartige Blasformmaschine und insbesondere eine Streckblasmaschine mehrere Blasstationen auf, in denen die Vorformlinge durch Anlegen eines Innendrucks zu Flaschen geblasen werden. Die EP 1 271 029 B1 beschreibt eine derartige Vorrichtung, welche auch als Ventilblock bezeichnet wird, zur pneumatischen Steuerung eines Blasdrucks zur Blasformung von Behältern. Dabei sind auch mehrere Ausführungsformen von aseptischen Ventilen bekannt.

Insbesondere bei aseptischen Blasformmaschinen wird zur Beaufschlagung der Behältnisse vorteilhaft ein steriles Druckmedium eingesetzt. Dieses Druckmedium, insbesondere Luft, wird mithilfe von Sterilfiltern sterilisiert und wird anschließend durch Druckleitungen zum Ventilblock und gegebenenfalls weiter in das Behältnis geführt.

Der vorliegenden Erfindung liegt daher die Aufgabe zugrunde, eine Vorrichtung zur Verfügung zu stellen, welche die Zufuhr eines Druckmediums in die Behältnisse erlaubt, ohne dass hierbei eine Kontamination des sterilen Druckmediums auftritt.

Diese Aufgabe wird erfindungsgemäß durch den Gegenstand des unabhängigen Anspruchs erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Vielzahl von Umformungsstationen auf, welche an einem beweglichen Träger angeordnet sind, wobei die Umformungsstation jeweils Blasformen aufweisen, welche zur Aufnahme der Kunststoffvorformlinge dienen und innerhalb derer die Kunststoffvorformlinge zu den Kunststoffbehältnissen umformbar sind. Dabei weisen die Umformungstationen jeweils relativ zu den Kunststoffvorformlingen bewegbare Beaufschlagungseinrichtungen auf, welche die in den Blasformen angeordneten Kunststoffvorformlinge mit einem fließfähigen und insbesondere gasförmigen Medium zu deren Expansion beaufschlagen. Weiterhin weisen die Umformungsstationen jeweils eine Ventilanordnung auf, welche die Zufuhr des fließfähigen Mediums zu den Kunststoffvorformlingen steuert sowie einen Reinraum, innerhalb dessen die Umformungsstationen mit den Beaufschlagungseinrichtungen transportiert werden, wobei dieser Reinraum mittels wenigstens einer Wandung gegenüber der Umgebung angeordnet beziehungsweise abgedichtet ist.

Erfindungsgemäß sind zwischen den Ventilanordnungen und den Beaufschlagungseinrichtungen jeweils Strömungsverbindungen zum Führen des fließfähigen Mediums vorgesehen und diese Ventilanordnungen sind zumindest bereichsweise außerhalb des Reinraums angeordnet, zumindest die Pilot- und Ansteuerventile zumindest bereichsweise außerhalb des Reinraums angeordnet sind. Dies bedeutet, dass die besagten Strömungsverbindungen in einem vorgegebenen Bereich des Strömungspfades des fließfähigen Mediums angeordnet sind. Dabei können sich diese Strömungsverbindungen beispielsweise direkt von den Ventilanordnungen zu den Blasdüsen erstrecken, es wäre jedoch auch möglich, dass sich die Strömungsverbindungen von den Ventilanordnungen zu Blaskolben erstrecken und von den Blaskolben aus die Blasluft zu den Blasdüsen gelangt. Die Beaufschlagungseinrichtungen können bevorzugt auch sowohl Blaskolben als auch Blasdüsen umfassen. Vorzugsweise sind die Ventilanordnungen in einem Arbeitsbetrieb (in dem eine Umformung von Kunststoffvorformlingen zu Kunststoffbehältnissen stattfindet) der Vorrichtung stets außerhalb des Reinraums angeordnet. Bei dem fließfähigen Medium handelt es sich daher bevorzugt um ein gasfähiges Medium und insbesondere um sterilisierte Blasluft zum Expandieren der Kunststoffvorformlinge. Vorteilhaft weist die Vorrichtung daher auch eine Sterilisierungseinrichtung zum Erzeugen sterilisierter Blasluft auf.

Wie oben erwähnt, sind diese Ventilanordnungen relativ schwer zu sterilisieren, da sie eine Vielzahl von Ventileinrichtungen und daher auch eine Vielzahl von Spalten aufweisen. Daher wird erfindungsgemäß vorgeschlagen, die Ventilanordnungen (im Folgenden als Ventilblock bezeichnet) außerhalb des Reinraums anzuordnen. Diese Ventilanordnungen oder Ventilblöke dienen, wie oben erwähnt, zum Steuern der unterschiedlichen Drücke. Die Ventilanordnung besteht dabei bevorzugt aus mehreren Ventilen, durch die die Prozessluft aus Druckluftreservoirs in die Kunststoffvorformlinge zugeführt und gegebenenfalls auch wieder von den fertig geformten Behältern in die Umgebung oder zurück in Drucklufttanks abgeführt wird. Vorteilhaft sind dabei diese Ventilanordnungen fest angeordnet. Bei dem Träger handelt es sich vorteilhaft um einen drehbaren Träger, der im Folgenden auch als Blasrad bezeichnet wird. Vorteilhaft weist die Vorrichtung verschiedene Reservoirs zum Aufbewahren von Druckluft auf, wobei die Ventilanordnungen von diesen Reservoirs versorgt werden.

Die Blasform kann vorteilhaft geöffnet und geschlossen werden, um ihr den Kunststoffvorformling zuzuführen beziehungsweise das fertig geformte Behältnis zu entnehmen. Vorteilhaft ist die Blasform mehrteilig ausgebildet und besonders bevorzugt sind die Blasformteile an Blasformträgern angeordnet.

Bei einer weiteren vorteilhaften Ausführungsform weist die Vorrichtung eine Reckstange auf, um die Kunststoffvorformlinge in ihrer Längsrichtung zu dehnen. Vorteilhaft ist der Reinraum kanalartig um die Umformungsstationen ausgebildet. Dies bedeutet, dass vorteilhaft bestimmte Bereiche der Vorrichtung, wie beispielsweise eine Welle zum Antreiben des Trägers und/oder auch bestimmte Bereiche des Trägers nicht in dem Sterilraum angeordnet sind.

Bei einer weiteren vorteilhaften Ausführungsform sind ein oder mehrere Führungskurven vorgesehen, welche die Bewegungsabläufe der einzelnen bewegbaren Elemente der Blasstationen steuern wie beispielsweise die Bewegungen der Blasformträger, die Bewegungen der Reckstange und insbesondere auch die Bewegungen der Beaufschlagungsseinrichtungen. Diese Führungskurven sind dabei wenigstens zum Teil (falls mehrere Führungskurven vorhanden sind) und bevorzugt wenigstens teilweise außerhalb des Reinraums angeordnet.

Bei einer weiteren vorteilhaften Ausführungsform ist die Beaufschlagungseinrichtung, die im Folgenden auch als Blasdüse bezeichnet wird, bewegbar gegenüber der Ventilanordnung angeordnet. Mit anderen Worten ist hier vorteilhaft die Ventilanordnung mitsamt der Ventile ortsfest befestigt und die Beaufschlagungseinrichtung beziehungsweise der Blaskolben führt einen senkrechten Hub zum Freigeben von Bestandteilen der Kunststoffvorformlinge wie zum Beispiel der Kunststoffvorformlings-Halsringe aus. Die Prozessluft strömt dabei durch die Ventile und die Bohrungen im Blaskolben in den Behälter d.h. den Kunststoffvorformling ein.

Damit sind vorteilhaft die Beaufschlagungseinrichtungen in einer Längsrichtung der Kunststoffvorformlinge gegenüber den Kunststoffvorformlingen bewegbar. Durch diese Bewegung können die Beaufschlagungseinrichtungen auf die Kunststoffvorformlinge aufgesetzt und nach dem Blasvorgang wieder von ihnen abgenommen werden. Bei einer weiteren vorteilhaften Ausführungsform sind die Ventilanordnungen in der Längsrichtung der Kunststoffvorformlinge unbeweglich gegenüber den Kunststoffvorformlingen.

Unter den Strömungsverbindungen werden insbesondere Einrichtungen verstanden, welche ein Medium und insbesondere ein gasförmiges Medium von einem ersten Punkt bzw. Bereich zu einem zweiten Punkt bzw. Bereich leiten bzw. führen. Vorteilhaft leitet die Strömungsverbindung das Medium in der Art eines umfänglich geschlossenen Kanals.

Bei einer weiteren vorteilhaften Ausführungsform weisen die Strömungsverbindungen wenigsten einen flexiblen Abschnitt auf. Dabei ist es möglich, dass von den Ventilanordnungen jeweils ein Schlauch zu den Beaufschlagungseinrichtungen bzw. Blaskolben führt, es wäre jedoch auch denkbar, dass lediglich ein Abschnitt der von der Ventilanordnung zu der Beaufschlagungseinrichtung führenden Strömungsverbindung flexibel ausgeführt ist. Bei der hier beschriebenen Variante mit einem Schlauch wird die Prozessluft durch einen flexiblen Kunststoffschlauch, der unten im Einzelnen erläutert wird, zugeführt.

Dabei ist, wie erwähnt, der Ventilblock beziehungsweise die Ventilanordnung ortsfest an dem Träger befestigt und der Blaskolben samt der Beaufschlagungseinrichtung führt einen senkrechten Hub zum Freigeben des Kunststoffvorformlinghalses aus. Vorteilhaft weist dabei der Schlauch eine sehr glatte Innenoberfläche auf, die keinen Halt für Keime bietet. Bevorzugt ist dabei die Innenoberfläche des Schlauchs lotusblütenartig beschichtet. Vorteilhaft sind auch die jeweiligen Anschlussstellen, mit denen der Schlauch an der Ventilanordnung und/oder der Beaufschlagungseinrichtung angeordnet ist hygienisch ausgeführt und weisen keine Spalte auf, in denen sich Keime vermehren können.

Vorteilhaft ist die Strömungsverbindung zumindest in der Längsrichtung der Behältnisse bzw. in der Richtung der Relativbewegung zwischen dem Kunststoffvorformling und der Beaufschlagungseinrichtung flexibel. Diese Flexibilität kann beispielsweise durch ein Verbiegen der Strömungsverbindung erreicht werden.

Vorteilhaft weist damit bei dieser Ausführungsform die Strömungsverbindung einen flexiblen Schlauch auf. Dieser flexible Schlauch passiert dabei vorteilhaft eine Grenze zwischen dem Reinraum und der Umgebung. So kann sich der Schlauch beispielsweise durch eine Wandung erstrecken, welche den Reinraum von der Umgebung abtrennt.

Bei einer vorteilhaften Ausführungsform weist der flexible Schlauch einen Innenschlauch auf und einen diesen Innenschlauch umgegebenden Mantelkörper. Dieser Innenschlauch kann dabei beispielsweise aus einem elastischen Material wie PTFE hergestellt und der diesen Schlauch umgebende Mantelkörper kann beispielsweise als Stahlgeflecht ausgeführt sein. Durch diese Ausgestaltung kann der Schlauch gleichwohl hohe Drücke bis hin zu 40 bar oder mehr aufnehmen.

Die Anmelderin behält sich vor, den hier beschriebenen Schlauch auch unabhängig von der Vorrichtung zu beanspruchen.

Dabei weist bei diesen Ausführungsformen die Vorrichtung eine flexible Verbindung bevorzugt einschließlich Dichtung zwischen der Ventilanordnung und der Beaufschlagungseinrichtung auf. Diese flexible Verbindung stellt dabei vorteilhaft auch eine Trennung zwischen dem Sterilraum und der Umgebung dar. Auf diese Weise wird sichergestellt, dass beim Freigeben der Hälse der Kunststoffvorformlinge zu keiner Zeit der Sterilraum in Kontakt mit der Umgebung steht. Bevorzugt ist die Strömungsverbindung wenigstens abschnittsweise bzw. streckenweise aus einem flexiblen Material hergestellt.

Wenn die Beaufschlagungseinrichtung beziehungsweise Blasdüse an dem Kunststoffvorformling anliegt, bietet vorteilhaft eine Membranaufnahme eine Auflagefläche für eine Rollmembran, sodass diese mit der Prozessluft beaufschlagt werden kann. Bei einer weiteren vorteilhaften Ausführungsform dient der Innenschlauch auch als Dichtfläche bei einer Verbindung mit weiteren Elementen. Auf diese Weise kann eine aseptische Verbindung eines feststehenden Ventilblocks mit der Beaufschlagungseinrichtung mittels eines metallisch ummantelten Kunststoffschlauches vorgenommen werden.

So kann beispielsweise der Innenschlauch einen aufgebördelten Innenschlauch aufweisen, der auch zur Verbindung mit anderen Körpern dient. Wie erwähnt, kann dann der Innenschlauch aus einem Kunststoff, wie beispielsweise PTFE, bestehen. Weiterhin weist vorteilhaft der Kunststoffschlauch insbesondere im Endabschnitt eine Hülse auf, in die der elastische Innenschlauch eingeführt ist. Die mit dem Druckmedium in Berührung kommende Innenwandung dieses Kunststoffschlauchs kann dabei in eine Flanschfläche hineinragen und durch diese Flanschfläche fest mit anderen Verbindungsstellen verbunden werden. Vorteilhaft ist damit der flexible Abschnitt des Schlauchs wenigstens abschnittsweise und teilweise in einer druckfesten Hülse angeordnet. Weiterhin ist vorteilhaft im Bereich der Flanschfläche eine zusätzliche Dichtung, insbesondere ein O-Ring, angebracht.

Bei einer weiteren vorteilhaften Ausführungsform weist die Strömungsverbindung eine Rollmembran auf. So kann die Strömungsverbindung einen flexiblen Abschnitt dieser Rollmembran aufweisen, wobei diese Rollmembran insbesondere auch eine Relativbewegung zwischen der Beaufschlagungseinrichtung und der Ventilanordnung erlaubt. Mit anderen Worten ist es möglich, die besagte Rollmembran so zu montieren, dass bei Anheben der Beaufschlagungseinrichtung der sterile Raum von der Umgebung getrennt bleibt.

In einer unteren Position, bei der die Beaufschlagungsreinrichtung auf dem Tragring des Kunststoffvorformlings anliegt kann sich beispielsweise diese Rollmembran mittels ihrer gesamten Außenfläche abstützen und kann so unproblematisch, das heißt ohne Schädigungen zu riskieren einseitig mit Prozessluft beaufschlagt werden. Wenn der Blaskolben, das heißt die Beaufschlagungseinrichtung den Hub nach oben durchführt, ist die Rollmembran nicht mit Luft beaufschlagt und daher nicht gefährdet. Um vollständiges Anliegen der Rollmembran auf der Auflagefläche zu ermöglichen, ist vorteilhaft die Höhe der Membranaufnahme auf dem Blaskolben einstellbar. Die Rollmembran bzw. allgemein die bewegliche Membran ist vorteilhaft gegenüber einem diese Rollmembran umgebenden Körper angeordnet.

Weiterhin ist es beispielsweise möglich, dass die Beaufschlagungseinrichtung den Hals des Kunststoffvorformlings überstülpt. Es wäre jedoch auch möglich, dass die Beaufschlagungseinrichtung auf einem oberen Rand des Kunststoffvorformlings bzw. dessen Gewinde während der Beaufschlagung des Vorformlings mit Druckluft anliegt.

Bevorzugt ist daher die Rollmembran bei Druckbelastung an einer die Rollmembran umgebenden Hülse angeordnet.

Weitere Formen und Ausführungsformen ergeben sich aus den beigefügten Zeichnungen:

Darin zeigen:
- Fig. 1: eine schematische Darstellung einer Anlage zum Herstellen von Kunststoffbehältnissen;
- Fig. 2: eine Ansicht eines Reinraums im Bereich einer Umformungsstation;
- Fig. 3: eine Darstellung einer Druckbeaufschlagungseinheit nach dem Stand der Technik;
- Fig. 4: eine erste Ausführungsform einer erfindungsgemäßen Druckbeaufschlagung;
- Fig. 5: eine weitere Ausführungsform einer erfindungsgemäßen Druckbeaufschlagung mit einer an einem Kunststoffvorformling angesetzten Blasdüse;
- Fig. 6: die Darstellung aus Fig. 5 bei von dem Kunststoffvorformling abgehobener Blasdüse.
- Fig. 7: eine Darstellung einer Schlauchverbindung nach dem Stand der Technik;
- Fig. 8: eine erfindungsgemäße Schlauchverbindung;
- Fig. 9: eine weitere Darstellung einer Blasdüsenanordnung;
- Fig. 10: eine Darstellung einer Dichtungseinrichtung; und
- Fig. 11a-11c: drei Darstellungen zur Veranschaulichung der Abdichtung der Blasdüse

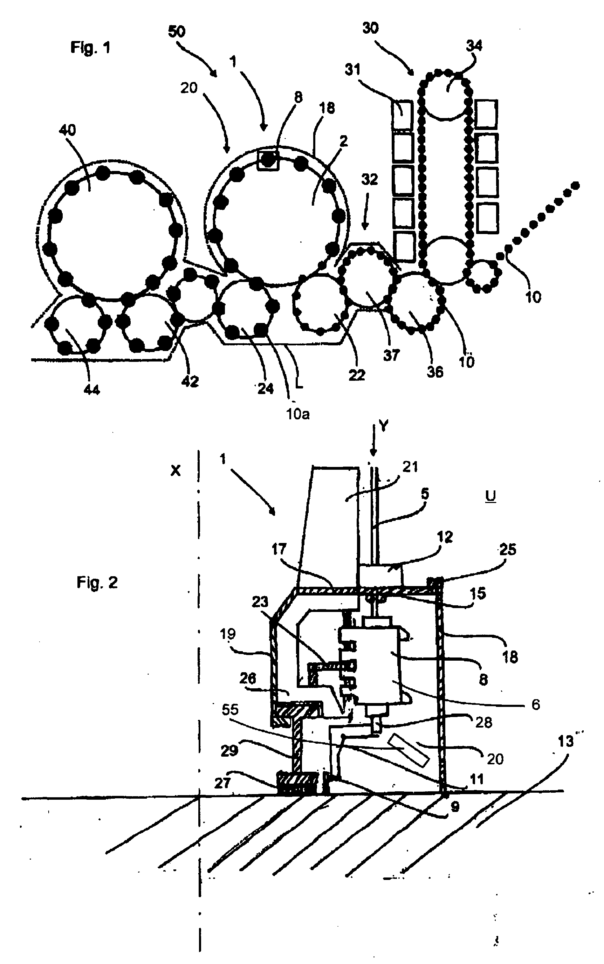

Figur 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 20 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen.

Die (nicht gezeigten) Blasformen sind innerhalb der Blasformträger 6 angeordnet.Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

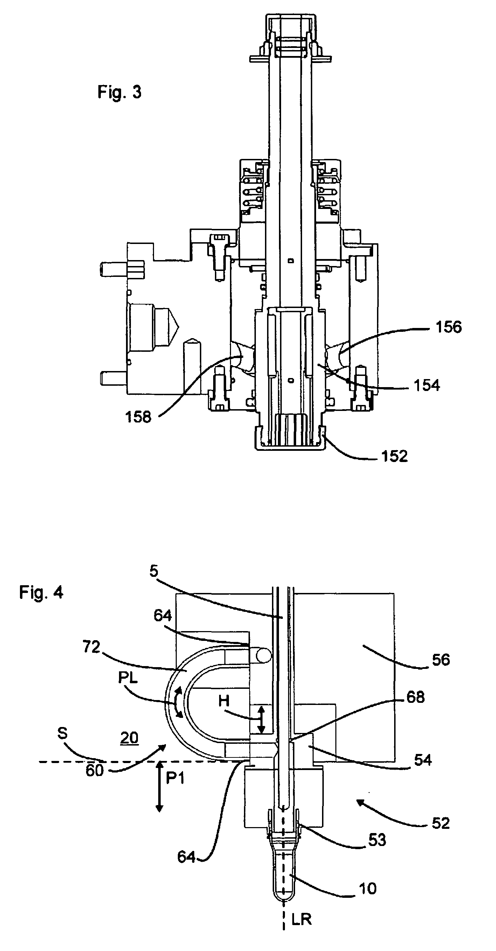

Fig. 3 zeigt eine Anordnung zum Beaufschlagen von Kunststoffvorformlingen mit Blasluft nach dem Stand der Technik. Dabei ist eine Beaufschlagungseinrichtung 152 vorgesehen, welche an eine Mündung eines (nicht gezeigten) Kunststoffvorformlings anlegbar ist, um diesen zu expandieren. Das Bezugszeichen 156 kennzeichnet eine Zuführung zum Zuführen von Blasluft und das Bezugszeichen 158 eine entsprechende Öffnung zum Abführen der Blasluft.

Der Blaskolben 154 bewegt sich hier gegenüber dem Ventilblock. Man erkennt, dass für diese Anordnung eine Vielzahl von Bohrungen und Spalten vorhanden sind, wodurch die in Fig. 3 gezeigte Anordnung nicht für aseptische Anordnungen geeignet ist.

Fig. 4 zeigt eine erfindungsgemäße Ausführungsform einer Anordnung zum Beaufschlagen von Kunststoffvorformlingen 10 mittels Blasluft. Auch hier ist eine Beaufschlagungseinrichtung 52 vorgesehen, welche an die Mündung der Kunststoffvorformlinge 10 anlegbar ist. Im Gegensatz zu der in Fig. 3 gezeigten Ausführungsform ist jedoch hier eine flexible Strömungsverbindung 72 zum Transportieren der Prozessluft PL bzw. Blasluft vorgesehen, welche über zwei Verbindungsstellen 64 einmal an einem Blaskolben 54 und einmal an dem Ventilblock 56 angeordnet ist. Durch diese hier als Schlauch ausgebildete Strömungsverbindung können sämtliche Blasluftströme treten, sowohl diejenigen, welche von dem Ventilblock 56 zu dem Kunststoffvorformling 10 gelangen als auch diejenigen, welche wieder zurück zu dem Ventilblock 56 bzw. der Ventilanordnung 56 gelangen.

Das Bezugszeichen H kennzeichnet den Hub des Blaskolbens 54 gegenüber der Ventilanordnung 56. Der Blaskolben 54 ist hier Bestandteil der Beaufschlagungseinrichtung 52. Das Bezugszeichen 68 kennzeichnet eine pneumatische Dichtung, die hier innerhalb des Blaskolbens angeordnet ist. Weiterhin ist auch die Reckstange 5 erkennbar, die ein Dehnen des Kunststoffvorformlings bewirkt, wobei diese Reckstange 5 hier durch den Blaskolben geführt wird. Der Blaskolben 54 bewegt sich damit in Fig. 4 in der durch den Pfeil P1 gezeigten Richtung. Das Bezugszeichen LR kennzeichnet die Längsrichtung der Kunststoffvorformlinge.

Das Bezugszeichen 20 bezieht sich wieder auf den Sterilraum und die gestrichelte Linie S kennzeichnet die Sterilraumgrenze. Mit anderen Worten sind innerhalb der Strömungsverbindung 60 beziehungsweise des Schlauchs 72 sterile Bedingungen und außerhalb dieser Verbindungseinrichtung teilweise unsterile Bedingungen. Bevorzugt erstreckt sich die Strömungsverbindung 60 bzw. der Schlauch 72 durch die Sterilraumgrenze hindurch.

Das Bezugszeichen 53 bezieht sich auf eine Blasdüse, welche Bestandteil der Beaufschlagungseinrichtung 52 ist. Diese Blasdüse 53 kann dabei an einen Bereich der Mündung des Kunststoffvorformlings angelegt werden, um diesen danach mit dem gasförmigen Medium zu beaufschlagen.

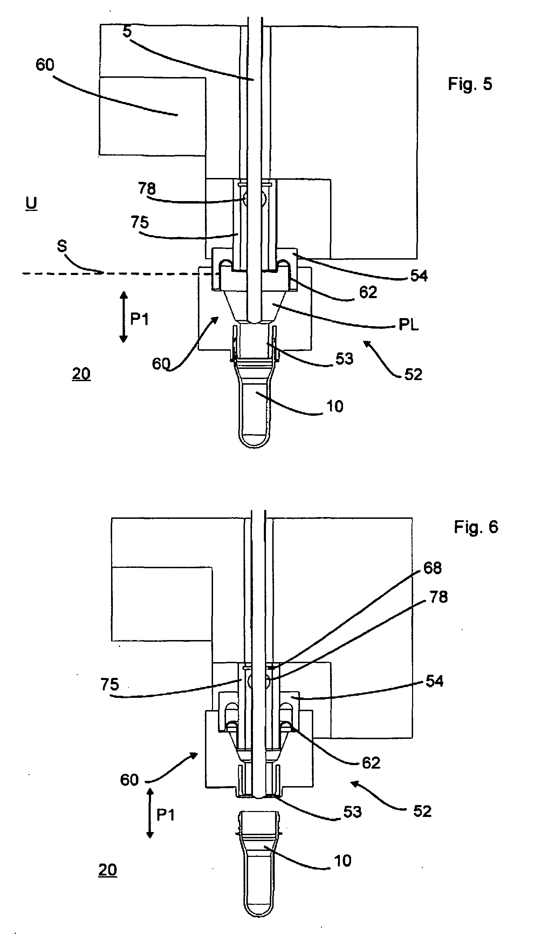

Fig. 5 zeigt eine weitere erfindungsgemäße Ausführungsform zum Expandieren von Kunststoffvorformlingen 10. Es ist ebenfalls wieder eine Beaufschlagungseinrichtung 52 bzw. Blasdüse 53 vorgesehen, die an den Kunststoffvorformling 10 anlegbar ist. Weiterhin ist jedoch hier zwischen dem Ventilblock 56 und dem gegenüber diesem Ventilblock 56 entlang des Pfeils P1 bewegbaren Blaskolben 54 eine Rollmembran 62 vorgesehen welche einen Abschnitt der Strömungsverbindung 60 für die Blasluft bildet. Diese Rollmembran bewirkt dabei insbesondere eine Flexibilität in der Richtung des Hubs der Beaufschlagungseinrichtung.

Fig. 5 zeigt die Position bei der die Beaufschlagungseinrichtung 52 an der Mündung des Vorformlings anliegt. Dabei ist hier eine feststehende Führung 75 bzw. Führungshülse angeordnet, der gegenüber der Blaskolben 54 bewegbar ist. Bei der in Fig. 5 gezeigten Situation ist der Blaskolben 54 in seiner untersten Position und die Rollmembran 62 liegt flächig an der Innenwandung des Blaskolbens 54 an. Falls nun eine Beaufschlagung mit Druckluft erfolgt, wird die Rollmembran 62 hierdurch lediglich in die Innenwandung des Blaskolbens 54 gedrückt und kann dadurch nicht beschädigt werden.

Bei der in Fig. 6 gezeigten Position ist der Blaskolben 54 gemeinsam mit der Beaufschlagungseinrichtung 52 in der oberen Position und damit, wie gezeigt, von dem Kunststoffvorformling 10 beabstandet. In dieser Situation ist die Rollmembran 62 zwar von der Innenwandung des Blaskolbens 54 beabstandet, wird jedoch auch nicht mit Druckluft beaufschlagt.

Das Bezugszeichen 68 kennzeichnet auch hier wieder eine pneumatische Abdichtung und das Bezugszeichen 78 eine Öffnung zum Zuführen von Druckluft. Bei der in Fig. 5 gezeigten Ausführungsform überstülpt, wie gezeigt, die Beaufschlagungseinrichtung 52 den Hals des Kunststoffvorformlings. Das Bezugszeichen PL kennzeichnet wiederum die Prozessluft.

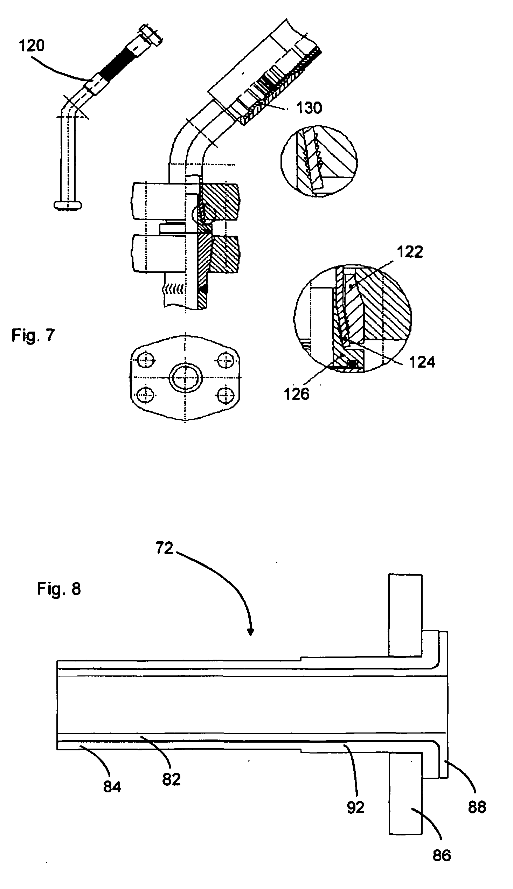

Fig. 7 zeigt eine Schlauchanordnung 120 nach dem Stand der Technik. Dabei sind insgesamt 5 Teilfiguren eines derartigen Schlauchs dargestellt. Man erkennt insbesondere an dem rechten unteren Teilbild, dass insbesondere im Bereich einer Ausreisssicherung 130 und eines Klemmrings 122 sowie eines Kragenrings 126 und eines Schlauchnippels 124 eine Vielzahl von Spalten auftreten, die schwer zu sterilisieren sind, beziehungsweise in denen sich Keime festsetzen können.

Fig. 8 zeigt dementsprechend eine Ausführungsform eines erfindungsgemäßen Schlauches 72. Es wird darauf hingewiesen, dass die hier beschriebene Schlauchverbindung auch unabhängig von den Gegenständen des unabhängigen Anspruchs beansprucht werden kann. Die Anmelderin behält sich daher vor, die hier beschriebene Schlauchanordnung unabhängig zu beanspruchen.

Auch die in den Fig. 5-6 gezeigte Ausführungsform kann unabhängig von aseptischen Anwendungen beziehungsweise dem Vorhandensein eines Reinraums Anwendung finden. Die Schlauchverbindung weist dabei einen inneren flexiblen Schlauch 82 auf sowie eine Ummantelung 84, die diesen Schlauch 82 umgibt. Ein Endabschnitt dieses Innenschlauchs 82 ragt derart hervor, dass er umgebördelt werden kann, um auf diese Weise eine Verbindung mit weiteren Elementen herzustellen.

Die in Fig. 8 gezeigte Schlauchanordnung 72 ist insbesondere für die hier wesentlichen aseptischen Anwendungen vorgesehen. Der Innenschlauch 82 besteht hier, wie oben erwähnt, aus beispielsweise PTFE. Der Kunststoffschlauch 72 ist für Prozessluft im Druckbereich von 0 bis 40 bar bevorzugt von 8 bis 40 bar, einsetzbar. Der PTFE-Schlauch 82 weist vorzugsweise eine gewellte Außenfläche, besonders bevorzugt eine glatte beziehungsweise polierte Innenfläche auf. Weiterhin ist vorzugsweise der Innenschlauch 62 nach außen aufgebördelt, so dass derartige Schläuche miteinander oder mit anderen Bauteilen hygienisch, das heißt spaltenfrei, verbunden werden können.

Um den hohen Drücken der Prozessluft Stand halten zu können, ist der Schlauch 82 bevorzugt mit dem Stahlgeflecht 84, wobei es sich vorteilhaft um ein Edelstahlgeflecht handelt, ummantelt. Das Bezugszeichen 92 bezieht sich auf einen Bund mit einer Presshülse, welche vorteilhaft vorhanden ist, um eine sichere Verbindung zwischen dem Schlauch 82 und der Ummantelung 84 herzustellen. Weiterhin wird vorteilhaft dieser Bund 92 mittels eines Gewindes aufgeschraubt und die Ummantelung 84 durch eine Presshülse auf dem Bund 92 gesichert. Das Bezugszeichen 86 kennzeichnet einen Flansch, der beispielsweise mit dem weiteren Flansch eines weiteren Schlauchstücks oder beispielsweise mit einem Gehäuse verbunden werden kann. Damit weist der Schlauch 72 aseptische beziehungsweise hygienische Anschlussstellen sowohl miteinander als auch zu anderen Bauteilen auf. Der Endabschnitt 88 des Schlauchs 82 ragt damit, wie gesagt, bevorzugt in den Bereich der Fläche des Flansches 86 hinein bzw. darüber hinaus und nimmt dort damit gleichzeitig eine Dichtungsfunktion zu einem Anschlussteil wahr.

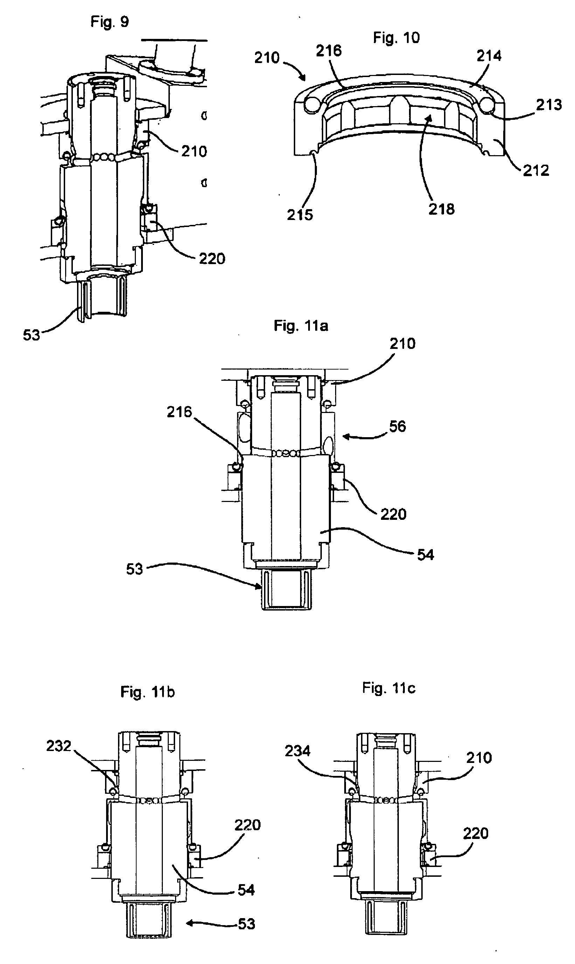

Fig. 9 zeigt eine Darstellung zur Veranschaulichung einer Abdichtung der Beaufschlagungseinrichtung bzw. der Blasdüsenanordnung gegenüber den Sterilraumgrenzen. Dabei ist eine erste (obere) bevorzugt stationär angeordnete Dichtungseinrichtung 210 sowie eine zweite (untere), ebenfalls in bevorzugt in der Richtung L stationär angeordnete Dichtungseinrichtung 220 vorgesehen. Diese Dichtungseinrichtungen 210, 220 nehmen dabei vorteilhaft sowohl eine Dichtungsfunktion für die Blasdüsenanordnung als auch eine Führungsfunktion wahr. Mit anderen Worten ist hier das Führungselement mit dem Dichtungselement kombiniert. Diese kombinierten Führungs- und Dichtungseinrichtungen 210, 220 können dabei sowohl einteilig als auch mehrteilig ausgebildet sein.

Dabei ist es möglich, dass die rückwärtigen, d.h. die dem Reinraum abgewandten Bereiche (d.h. die Todräume) der Dichtungs- und Führungselemente derart zu dem Reinraum hin abgedichtet sind, dass kein Austausch der sterilen Blasluft oder der Sterilluft mit diesem rückwärtigen Bereich möglich ist.

Fig. 10 zeigt eine Detaildarstellung einer derartigen Dichtungseinrichtung. Diese weist einen Grundkörper 212 mit einer hieran insbesondere flexibel angeordneten Dichtlippe 216 auf. In einer Ausnehmung 213 ist ein O- Ring 214 angeordnet. Dieser O-Ring dient einerseits, um eine Vorspannung der Dichtlippe radial nach innen d.h. auf die Blasdüsenanordnung zu bewirken. Andererseits bewirkt dieser O-Ring 214 auch eine hygienische Kantenabdichtung.

Das Bezugszeichen 218 kennzeichnet ein geschlitztes Führungselement, welches an der Innenseite der Dichtungseinrichtung 210 angeordnet ist. Diese geschlitzte Ausführungsform bewirkt, dass ein Sterilisationsgas leichter in die Hinterschneidungen bzw. Zwischenräume eintreten kann. Die Führungsfläche bzw. das Führungselement 218 ist daher bevorzugt mit einem oder mehreren Schlitzen versehen. Das Bezugszeichen 215 bezieht sich auf einen (umlaufenden) Einstich, in den beispielsweise ein weiterer (insbesondere hygienischer) O-Ring eingefügt werden kann.

Die Figuren 11 a - 11 c zeigen mögliche Positionen einer Blasdüse. Bei der in Fig. 11 a gezeigten Darstellung ist die Blasdüse in einer unteren Position (in der eine Beaufschlagung der Kunststoffvorformlinge möglich ist). Man erkennt hier wieder die Dichtlippen 216, die an dem Blaskolben 54 bzw. an dem Ventilblock 56 anliegen.

Bei den in den Fig. 11b und 11c gezeigten Darstellungen befindet sich die Blasdüse 53 in einer oberen Position. Bei der in Fig. 11b gezeigten Ausführungsform weist der Blaskolben 54 an seinem Aussenumfang einen geradlinigen Verlauf 232 auf. Bei der in Fig. 11c gezeigten Ausführungsform ist an dem Aussenumfang des Blaskolbens 54 eine (von oben nach unten verlaufende Verjüngung 234 vorgesehen. Diese Verjüngung an dem Blaskolben 54 trägt ebenfalls zur besseren Ausbreitung des Sterilisationsgases bei.

Die hygienischen O- Ringe können vorteilhaft an den jeweiligen Kanten der Dichtungseinrichtungen 210, 220 derart vorgespannt werden, dass keine (Strömungs-) verbindung mit dem unsterilen Raum entstehen kann.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Umformungsvorrichtung
- 2: Träger, Transporteinrichtung
- 5: Reckstange
- 6: Blasformträger
- 8: Blasstation, Umformungsstation
- 9: Führungskurve
- 10: Kunststoffvorformlinge
- 10a: Behältnis
- 11: Folgeeinrichtung
- 12: Schlitten
- 13: Boden
- 17: Deckel
- 18: Wandung
- 19: Seitenwand, Abschnitt
- 20: Reinraum
- 22: Zuführeinrichtung
- 23: Halteeinrichtung
- 24: Abführeinrichtung
- 25: Dichtungseinrichtung
- 26: Träger
- 27: Dichtungseinrichtung
- 28: Träger (für Bodenform)
- 29: Haltekörper
- 30: Heizeinrichtung
- 31: Heizelemente
- 32: Sterilisationseinrichtung
- 36: Übergabeeinheit
- 37: Transportrad
- 40: Befüllungseinrichtung
- 42: Übergabeeinheit
- 44: Transporteinheit
- 50: Anordnung
- 52: Beaufschlagungseinrichtung
- 53: Blasdüse
- 54: Blaskolben
- 55: Sterilisationseinrichtung
- 56: Ventilanordnung, Ventilblock
- 60: Strömungsverbindung
- 62: Rollmembran
- 64: Verbindungsstellen
- 68: pneumatische Abdichtung
- 72: Schlauch
- 75: Führung
- 78: (Zuführ)-öffnung
- 82: flexibler Schlauch
- 84: Ummantelung
- 86: Flansch
- 88: Endabschnitt
- 92: Bund
- 120: Schlauch (StdT)
- 122: Klemmring (StdT
- 124: Schlauchnippel (StdT)
- 126: Kragenring (StdT)
- 130: Ausreisssicherung (StdT)
- 152: Beuafschlagungseinrichtung
- 154: Blaskolben (StdT)
- 156: Zuführung (StdT)
- 158: Öffnung zum Abführen der Blasluft (StdT).
- 210,220: Dichtungseinrichtung
- 212: Grundkörper
- 213: Ausnehmung
- 214: O-Ring
- 216: Dichtlippe
- 218: geschlitztes Führungselement
- 215: Einstich
- 232: geradliniger Verlauf
- 234: Verjüngung
- H: Hub des Blaskolbens
- L: Begrenzung des Reinraums 20
- LR: Längsrichtung der Kunststoffvorformünge
- X: Achse
- Y: Richtung
- P1: Pfeil
- PL: Prozessluft
- S: Sterilraumgrenze
- U: (unsterile) Umgebung des Reinraums 20

## Patentansprüche

1. Vorrichtung (1) zum Umformen von Kunststoffvorformlingen (10) zu Kunststoffbehältnissen (10 a), mit einer Vielzahl von Umformungsstationen (8), welche an einem beweglichen Träger (2) angeordnet sind, wobei die Umformungsstationen (8) jeweils Blasformen aufweisen, welche zur Aufnahme der Kunststoffvorformlinge (10) dienen und innerhalb derer die Kunststoffvorformlinge (10) zu den Kunststoffbehältnissen (10 a) umformbar sind, und wobei die Umformungsstationen (8) jeweils relativ zu den Kunststoffvorformlingen (10) bewegbare Beaufschlagungseinrichtungen (52) aufweisen, welche die in den Blasformen angeordneten Kunststoffvorformlinge (10) mit einem fließfähigen Medium zu deren Expansion beaufschlagen und wobei die Umformungsstationen (8) jeweils eine Ventilanordnung (56) aufweisen, welche die Zufuhr des fließfähigen Mediums zu den Kunststoffvorformlingen (10) steuert, mit einem Reinraum (20), innerhalb dessen die Umformungsstationen (8) mit den Beaufschlagungseinrichtungen (52) transportiert werden, wobei dieser Reinraum (20) mittels 20 wenigstens einer Wandung (17, 18, 19) gegenüber der Umgebung außerhalb des Reinraums angeordnet ist
**dadurch gekennzeichnet, dass**
zwischen den Ventilanordnungen (56) und den Beaufschlagungseinrichtungen (52) jeweils Strömungsverbindungen (60) zum Führen des fließfähigen Mediums vorgesehen sind und die Ventilanordnungen (66) zumindest bereichsweise außerhalb des Reinraums (20) angeordnet sind, wobei zumindest Pilot- und Ansteuerventile zumindest teilweise außerhalb des Reinraumes angeordnet sind.

2. Vorrichtung nach Anspruch 1,
**dadurch gekennzeichnet, dass**
die Beaufschlagungseinrichtungen (52) in einer Längsrichtung der Kunststoffvorformlinge (10) gegenüber den Kunststoffvorformlingen (10) bewegbar sind.

3. Vorrichtung nach wenigstens einem der vorangegangenen Ansprüche,
**dadurch gekennzeichnet, dass**
die Ventilanordnungen (56) in der Längsrichtung (L) der Kunsistoffvorformlinge (10) unbeweglich gegenüber den Kunststoffvorformlingen (10) sind.

4. Vorrichtung (1) nach wenigstens einem der vorangegangenen Ansprüche,
**dadurch gekennzeichnet, dass**
die Strömungsverbindung (60) wenigstens einen flexiblen Abschnitt (62, 72) aufweist.

5. Vorrichtung nach wenigstens einem der vorangegangenen Ansprüche,
**dadurch gekennzeichnet, dass**
die Strömungsverbindung (60) einen flexiblen Schlauch (72) aufweist.

6. Vorrichtung nach Anspruch 5,
**dadurch gekennzeichnet, dass**
der flexible Schlauch (72) einen Innenschlauch (82) und einen diesen Innenschlauch (82) umgebenden Mantelkörper (84) aufweist.

7. Vorrichtung nach Anspruch 6.
**dadurch gekennzeichnet, dass**
der Innenschlauch (82) auch als Dichtfläche bei der Verbindung mit weiteren Elementen dient.

8. Vorrichtung nach wenigstens einem der vorangegangenen Ansprüche,
**dadurch gekennzeichnet, dass**
die Strömungsverbindung ein Dichtelement bzw. Trennelement, insbesondere eine Rollmembran (62) aufweist

9. Vorrichtung nach Anspruch 8,
**dadurch gekennzeichnet, dass**
die Rollmembran (62) bei Druckbelastung in einer die Rollmembran (62) umgebenden Hülse (54) angeordnet ist.

## Claims

1. Apparatus (1) for shaping preforms of plastic (10) to give containers of plastic (10a), with a plurality of shaping stations (8) which are arranged on a movable carrier (2), wherein the shaping stations (8) each have blowing moulds which serve to accommodate the preforms of plastic (10) and within which the preforms of plastic (10) can be shaped to give the containers of plastic (10a), and wherein the shaping stations (8) each have charging devices (52) which are movable relative to the preforms of plastic (10) and which charge the preforms of plastic (10) arranged in the blowing moulds with a flowable medium for expansion thereof, and wherein the shaping stations (8) each have a valve arrangement (56) which controls the feed of the flowable medium to the preforms of plastic (10), with a clean chamber (20) within which the shaping stations (8) are conveyed with the charging devices (52), wherein this clean chamber (20) is arranged against the surroundings outside the clean chamber by means of at least one wall (17, 18, 19),
**characterized in that**
flow connections (60) for leading the flowable medium are in each case provided between the valve arrangements (56) and the charging devices (52) and the valve arrangements (56) are arranged at least in regions outside the clean chamber (20), wherein at least pilot and control valves are arranged at least in sections outside the sterile chamber.

2. Apparatus according to claim 1,
**characterized in that**
the charging devices (52) are movable relative to the preforms of plastic (10) in a longitudinal direction of the preforms of plastic (10).

3. Apparatus according to at least one of the preceding claims,
**characterized in that**
the valve arrangements (56) are immovable relative to the preforms of plastic (10) in the longitudinal direction (L) of the preforms of plastic (10).

4. Apparatus (1) according to at least one of the preceding claims,
**characterized in that**
the flow connection (60) has at least one flexible section (62, 72).

5. Apparatus according to the preceding claim 1,
**characterized in that**
the flow connection (60) has a flexible hose (72).

6. Apparatus according to claim 5,
**characterized in that**
the flexible hose (72) has an inner hose (82) and a jacket body (84) surrounding this inner hose (82).

7. Apparatus according to claim 6,
**characterized in that**
the inner hose (82) also serves as a sealing surface when connected to further elements.

8. Apparatus according to the preceding claim 1,
**characterized in that**
the flow connection has a sealing element or respectively separating element, in particular a rolling membrane (62).

9. Apparatus according to claim 8.
**characterized in that**
when under a pressure load, the rolling membrane (62) is arranged in a sheath (54) surrounding the rolling membrane (62).

## Revendications

1. Installation (1) pour la déformation de préformes en matière plastique (10) pour obtenir des récipients en matière plastique (10a), avec une pluralité de stations de déformation (8) disposées sur un support (2) mobile, lesdites stations de déformation (8) comportant chacune des moules de soufflage servant à la réception des préformes en matière plastique (10) et à l'intérieur desquels les préformes en matière plastique (10) sont déformables pour obtenir les récipients en matière plastique (10a), et les stations de déformation (8) comportant chacune des dispositifs d'alimentation (52) déplaçables par rapport aux préformes en matière plastique (10), lesquels alimentent en fluide apte à l'écoulement les préformes en matière plastique (10) disposées dans les moules de soufflage pour expanser celles-ci, et les stations de déformation (8) comportant chacune un agencement de soupapes (56) qui commande l'amenée du fluide apte à l'écoulement vers les préformes en matière plastique (10), avec un compartiment stérile (20) à l'intérieur duquel les stations de déformation (8) sont transportées avec les dispositifs d'alimentation (52), ledit compartiment stérile (20) étant séparé de l'environnement extérieur audit compartiment stérile au moyen d'au moins une paroi (17, 18, 19),
**caractérisée en ce que**
des raccords d'écoulement (60) respectifs pour la conduction du fluide apte à l'écoulement sont prévus entre les agencements de soupapes (56) et les dispositifs d'alimentation (52), et **en ce que** les agencements de soupapes (56) sont disposés au moins partiellement en dehors du compartiment stérile (20), au moins des soupapes pilotes et des soupapes de contrôle étant disposés au moins partiellement au dehors du compartiment stérile.

2. Installation selon la revendication 1, **caractérisée en ce que**
les dispositifs d'alimentation (52) sont déplaçables par rapport aux préformes en matière plastique (10) dans la direction longitudinale des préformes en matière plastique (10).

3. Installation selon au moins une des revendications précédentes, **caractérisée en ce que**
les agencements de soupapes (56) sont fixes par rapport aux préformes en matière plastique (10) dans la direction longitudinale (L) des préformes en matière plastique (10).

4. Installation (1) selon au moins une des revendications précédentes, **caractérisée en ce que**
le raccord d'écoulement (60) comporte au moins un tronçon flexible (62,72).

5. Installation selon au moins une des revendications précédentes, **caractérisée en ce que**
le raccord d'écoulement (60) comprend un tuyau flexible (72).

6. Installation selon la revendication 5, **caractérisée en ce que**
le tuyau flexible (72) comprend un tuyau intérieur (82) et un corps de gainage (84) entourant ledit tuyau intérieur (82).

7. Installation selon la revendication 6, **caractérisée en ce que**
le tuyau intérieur (82) sert également de surface d'étanchéité pour la connexion avec d'autres éléments.

8. Installation selon au moins une des revendications précédentes, **caractérisée en ce que**
le raccord d'écoulement comporte un élément d'étanchéité ou respectivement un élément de séparation, en particulier une membrane déroulante (62).

9. Installation selon la revendication 8, **caractérisée en ce que**
la membrane déroulante (62) est disposée dans une gaine (54) entourant ladite membrane déroulante (62) en cas de contrainte de pression.
